# EUROPEAN PATENT SPECIFICATION

(11) **EP 2 740 624 B1**
(45) Date of publication and mention of the grant of the patent: **23.03.2016**
(21) Application number: 13195513.0
(22) Date of filing: 03.12.2013
(51) Int. Cl.: B60K 1/04, E05B 83/00, B60L 11/18

(54) **Charging unit structure for electrically driven vehicle**
Ladeeinheitsstruktur für elektrisch angetriebenes Fahrzeug
Structure d'unité de chargement pour véhicule électrique

(30) Priority: 05.12.2012 JP 2012266195
(43) Date of publication of application: 11.06.2014
(73) Proprietor: Mitsubishi Jidosha Kogyo K.K., Tokyo 108-8410 (JP)
(72) Inventor: Ichimura, Shintaro, Tokyo, Tokyo 108-8410 (JP); Lee, Kaien, Tokyo, Tokyo 108-8410 (JP)
(74) Representative: Vossius & Partner Patentanwälte Rechtsanwälte mbB

(56) References cited:
- EP-A1- 2 174 815
- EP-A1- 2 505 417
- EP-A2- 2 105 343
- DE-A1-102010 048 386
- US-A1- 2011 139 521

## Description

### BACKGROUND

The present invention relates to a charging unit structure for an electrically driven vehicle.

In an electrically driven vehicle on which an electric motor driven by electric power supplied from a battery is mounted, a charging unit structure for charging the battery with electric power is disposed.

JP-A-2010-288363 discloses a charging unit structure where a recess is disposed in the front edge of a hood, and a recessed housing in which a charging port in which charging of a battery with electric power is performed is housed, and a lid member for opening and closing an opening of the housing are disposed above a bumper in the front portion of the vehicle body while parts of the housing and the lid are located in the recess.

In the above-described prior art, when a charging unit structure is applied to an existing vehicle body, however, the design of the front body portion including the hood and the bumper must be largely changed, and therefore the design cost is increased.

Moreover, the lid member is disposed across the hood and the bumper. Therefore, the three members or the lid member, the bumper, and the hood must be installed in the vehicle body while correctly maintaining the positional relationship between the lid member and the hood, and that between the lid member and the bumper. Consequently, the assembling property is lowered.

Generic document DE 10 2010 048 386 A1 relates to a device for connecting a vehicle driven by electrical current to a socket of a low voltage AC power network, the device comprising a charger lead having a plug that fits into the socket. The plug and at least a part of the charger lead are arranged in the side mirror of the vehicle.

Document US 2011/0139521 A1 relates to a charging cable-housing device which includes a charging cable that supplies electric power from an external electric power source to a vehicle, a bobbin which is rotatable, and on which the charging cable is wound, and which is disposed in a rear portion of the vehicle.

Document EP 2 505 417 A1 relates to a hybrid car which is a vehicle capable of being externally charged through a charging cable. The hybrid car includes a front door opened and closed when an occupant gets into and out of a vehicle cabin, and a cable reel mounted within the front door for taking up the charging cable. The front door has a resin portion located above the cable reel. A pull-out opening directed to the resin portion for pulling out the charging cable is formed in the cable reel. A take-out opening for taking out the charging cable pulled out from the pull-out opening from the front door to outside of the vehicle is formed in the resin portion.

Document EP 2 105 343 A2 relates to a vehicle having a plurality of energy ports such as a charging port, charging ports for supplying electric energy to a high voltage battery and a fuel supply port for supplying fuel to a fuel tank. The fuel supply port and charging ports are respectively provided with lid members that are switched between a closed state and an open state by respective lock mechanisms.

### SUMMARY

It is an object of the invention to provide a charging unit structure for an electrically driven vehicle which is advantageous in improving the assembling property while suppressing the change in the design of the vehicle body to the minimum.

According to the present invention, there is provided a charging unit structure for an electrically driven vehicle, the charging unit structure comprising: an opening/closing member which is configured to open and close an opening of a vehicle body; a battery which is configured to supply electric power to a running motor; and a charging port through which charging of the battery is performed, the charging unit structure comprising: a charge opening which is disposed in the opening/closing member, and in which the charging port is placed; and a lid member which is configured to open and close the charge opening.

According to the present invention, in the case where the charging unit structure is applied to an existing vehicle body, it is requested only to change the design of the opening/closing member. Therefore, the change in the design of the vehicle body can be suppressed to the minimum. This is advantageous in suppressing the design cost.

Moreover, the positioning of the charge opening, the charging port, and the opening/closing member can be performed easily and correctly. This is advantageous in improving the assembling property of the charging unit structure.

The charging unit structure may further comprise: opening/closing member locking means for locking the opening/closing member to the vehicle body in a state where the opening/closing member closes the opening of the vehicle body; lid member locking means for locking the lid member to the opening/closing member in a state where the lid member closes the charge opening; and first unlocking prohibiting means for, when the lid member is in an unlocked state, prohibiting unlocking by the opening/closing member locking means.

According to the present invention, the opening/closing member is prohibited from being opened in the state where the lid member is opened, and therefore it is possible to prevent the charging gun during the charging operation, and the opening/closing member from butting against each other to damage the opening/closing member. The vehicle may include an opening/closing member locking operating unit which is configured to operate the opening/closing member locking means, and the first unlocking prohibiting means may operate in conjunction with the lid member locking means to suppress an operation of the opening/closing member locking operating unit.

According to the present invention, the first unlocking prohibiting means is disposed in the opening/closing member locking operating unit, and hence it is possible to surely prevent an erroneous operation from occurring.

The charging unit structure may further comprise: opening/closing member locking means for locking the opening/closing member to the vehicle body in a state where the opening/closing member closes the opening of the vehicle body; lid member locking means for locking the lid member to the opening/closing member in a state where the lid member closes the charge opening; and second unlocking prohibiting means for, when the opening/closing member locking means is in an unlocked state, prohibiting unlocking of the lid member.

According to the present invention, the lid member is prohibited from being opened in the state where the opening/closing member is unlocked. Therefore, the opening/closing member prohibits the charging port from being accessed while the opening/closing member is opened, and an erroneous operation such as a contact failure in a work of connecting the charging gun to the charging port is prevented from occurring.

The vehicle may include a lid member locking operating unit which is configured to operate the lid member locking means, and the second unlocking prohibiting means may operate in conjunction with the opening/closing member locking means to suppress an operation of the lid member locking operating unit.

According to the present invention, the second unlocking prohibiting means is disposed in the lid member locking operating unit, and therefore it is possible to surely prohibit the charging port from being accessed while the opening/closing member is opened.

The opening of the vehicle body may be an upper-end opening that is opened above a front space formed in front of a dash panel, and the opening/closing member may be a hood which is configured to open and close the upper-end opening.

According to the present invention, the invention is applied to the hood. In the case where the charging unit structure is applied to an existing vehicle body, therefore, it is requested only to change the design of the hood. Consequently, the change in the design of the front portion of the vehicle body can be suppressed to the minimum. This is advantageous in suppressing the design cost.

The opening of the vehicle body may be a doorway, and the opening/closing member may be a door which is configured to open and close the doorway.

According to the present invention, the invention is applied to the door. In the case where the charging unit structure is applied to an existing vehicle body, therefore, it is requested only to change the design of the door. Consequently, the change in the design of the vehicle body can be suppressed to the minimum. This is advantageous in suppressing the design cost.

The opening of the vehicle body may be an article carry in/out port, and the opening/closing member may be a trunk lid which is configured to open and close the article carry in/out port.

According to the present invention, the invention is applied to the trunk lid. In the case where the charging unit structure is applied to an existing vehicle body, therefore, it is requested only to change the design of the trunk lid. Consequently, the change in the design of the vehicle body can be suppressed to the minimum. This is advantageous in suppressing the design cost.

### BRIEF DESCRIPTION OF THE DRAWINGS

Fig. 1 is a perspective view of an electrically driven vehicle 10 including a hood 14 to which a charging unit structure 32 of a first embodiment is applied, as viewed from the front side.
Fig. 2 is an exploded perspective view of the hood 14 to which the charging unit structure 32 of the first embodiment is applied.
Fig. 3 is a perspective view of a hood opening operating lever 28 in the first embodiment.
Fig. 4 is a perspective view of the charging unit structure 32 of the first embodiment.
Fig. 5 is a perspective view of the charging unit structure 32 including a lid opening operating lever 52 in the first embodiment.
Fig. 6 is a perspective view of the lid opening operating lever 52 in the first embodiment.
Fig. 7 is a diagram of lid member locking means 38 for locking a state where a charge opening 34 is closed by a lid member 36.
Fig. 8 is a diagram of the lid member locking means 38 in a state where the lid member 36 is set to a half-opened state by operating the lid opening operating lever 52.
Fig. 9 is a diagram of the lid member locking means 38 in a state where a striker 48 butts against a first swing lever 54 when the lid member 36 is changed from a fully opened state to a fully closed state.
Fig. 10 is a perspective view of the charging unit structure 32 including the hood opening operating lever 28 and the lid opening operating lever 52.
Fig. 11 is a perspective view of the hood opening operating lever 28.
Fig. 12 is a diagram showing the operation of a hood opening prohibiting lever 68 in a second embodiment.
Fig. 13 is a diagram of the lid member locking means 38 for locking the state where the charge opening 34 is closed by the lid member 36.
Fig. 14 is a diagram of the lid member locking means 38 in a state where the lid member 36 is set to a half-opened state by operating the lid opening operating lever 52.
Fig. 15 is a perspective view of the charging unit structure 32 including the hood opening operating lever 28 and lid opening operating lever 52 in a third embodiment.
Fig. 16 is a perspective view of the lid opening operating lever 52 in the third embodiment.
Fig. 17 is a diagram showing the operation of a lid opening prohibiting lever 76 in the third embodiment.
Fig. 18A is a diagram showing a configuration where the charge opening 34 and the lid member 36 are disposed in an opening/closing member, and a charging port 16 is disposed in a member placed in the front space, and Fig. 18B is a diagram showing a configuration where the charge opening 34 and the lid member 36 are disposed in the opening/closing member, and the charging port 16 is disposed in a supporting member supporting a member placed in the front space.
Fig. 19A is a diagram showing a configuration where the charge opening 34 is disposed in the opening/closing member, and the charging port 16 and the lid member 36 are disposed in a member placed in the front space, and Fig. 19B is a diagram showing a configuration where the charge opening 34 is disposed in the opening/closing member, and the charging port 16 and the lid member 36 are disposed in a supporting member supporting a member placed in the front space.
Fig. 20 is a perspective view showing a modification in which the charging unit structure 32 is applied to a door 88.
Fig. 21 is a perspective view showing another modification in which the charging unit structure 32 is applied to a trunk lid 92.

### DETAILED DESCRIPTION OF EXEMPLARY EMBODIMENTS

### (First embodiment)

Next, an embodiment in which the charging unit structure for an electrically driven vehicle according to the invention is applied to a hood will be described.

In the invention, an electrically driven vehicle 10 includes an electric vehicle, plug-in hybrid vehicle, or the like which is caused to run by driving a running motor with electric power supplied from a battery.

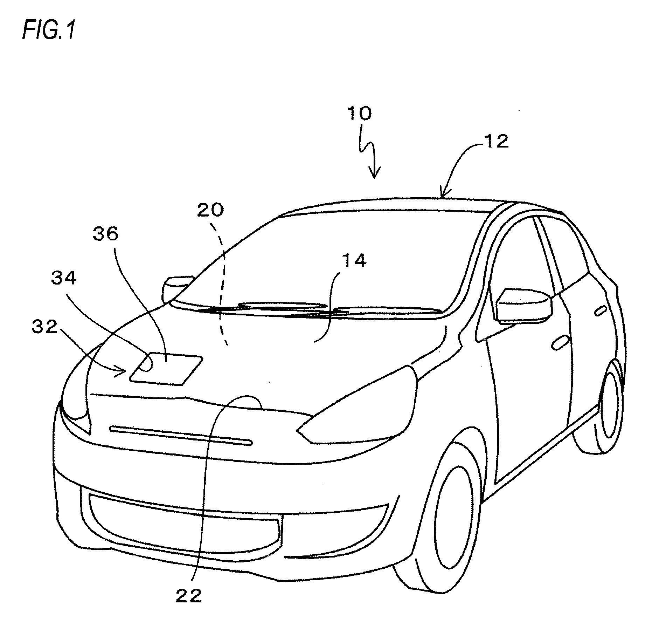

As shown in Figs. 1 to 3, the electrically driven vehicle 10 includes the vehicle body 12, a hood 14, a battery (not shown) for supplying electric power to a running motor, charging ports 16, hood locking means 18 (opening/closing member locking means).

As shown in Fig. 1, the hood 14 opens and closes an upper-end opening 22 which is opened above the front space 20 formed in front of a dash panel. In the embodiment, the hood 14 corresponds to the opening/closing member, and the upper-end opening 22 corresponds to the opening of the vehicle body 12.

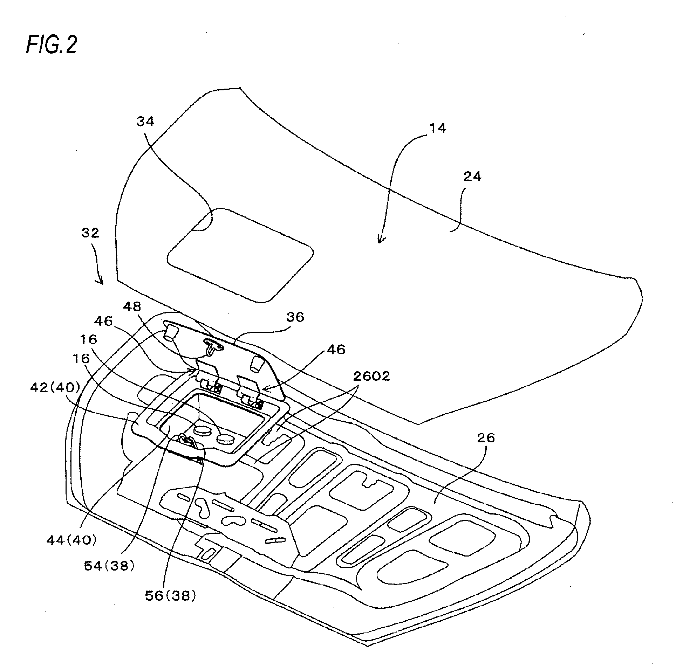

As shown in Fig. 2, the hood 14 includes an outer panel 24 which constitutes the exterior surface, and an inner panel 26 which is placed inside the outer panel 24, and which is integrally attached to the outer panel 24.

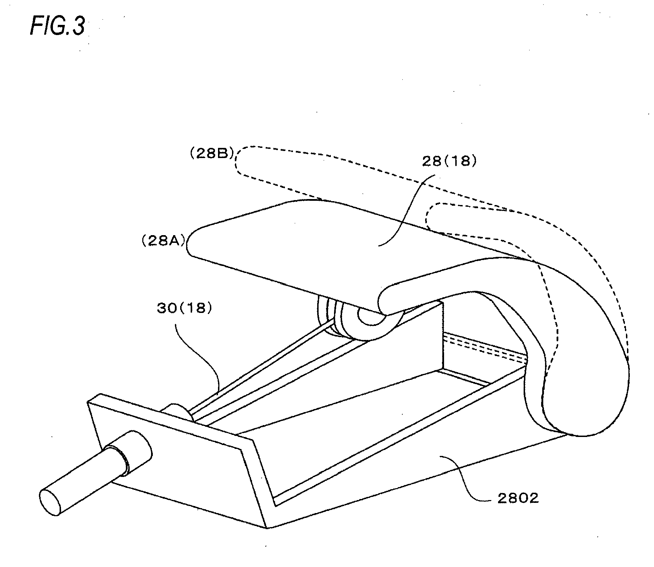

As shown in Fig. 3, the hood locking means 18 locks and unlocks the state where the upper-end opening 22 is closed by the hood 14. In the embodiment, the hood locking means 18 corresponds to the opening/closing member locking means which locks the opening/closing member to the vehicle body 12 in the closed state.

The hood locking means 18 includes: a striker (not shown) which is attached to the lower surface of the front end of the hood 14; a latch unit (not shown) which is placed in a front portion of the front space 20, and which engages with and disengages from the striker; a hood opening operating lever 28 which is swingably disposed in the vehicle cabin through a bracket 2802; and a hood opening cable wire 30 through which the hood opening operating lever 28 and the latch unit are coupled with each other.

As shown in Fig. 3, usually, the hood opening operating lever 28 is located at the initial position (28A), and, when the hood opening operating lever 28 is swung from the initial position (28A) to the opening position (28B), the locked state of the striker and the latch unit is cancelled, so that the hood 14 is set to a half-opened state where the fingers can be inserted under the lower surface of the front end of the hood, and the hood is upward openable. In the embodiment, the hood opening operating lever 28 corresponds to the opening/closing member locking operating unit for operating the opening/closing member locking means.

Any of various known conventional structures may be employed as the hood locking means 18.

Next, the charging unit structure 32 will be described.

As shown in Figs. 1, 2, and 4, the charging unit structure 32 includes a charge opening 34, the charging ports 16, the lid member 36, and lid member locking means 38.

As shown in Figs. 1, 2, and 4, the charge opening 34 is formed in a front portion of the outer panel 24 and has a rectangular shape.

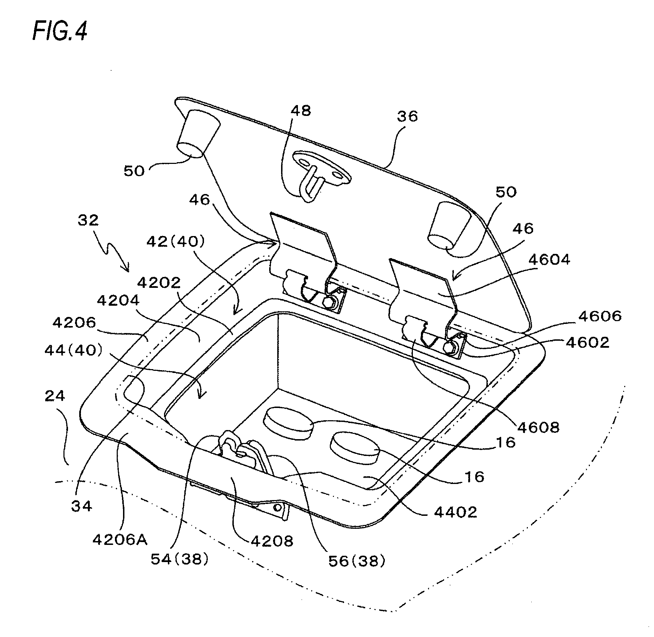

As shown in Fig. 4, the charging ports 16 are placed in the charge opening 34.

Specifically, the charging ports 16 are placed so as to be located inside the charge opening 34, or in a portion where the charging ports can be viewed through the charge opening 34, so that a charging gun can be connected to one of the charging ports through the charge opening 34.

In the embodiment, the charging ports 16 are attached to the hood 14 through an attaching member 40. Therefore, the charging ports 16 are attached to the hood 14.

As the charging ports 16, two ports, or a port for normal charging, and that for quick charging are disposed.

The attaching member 40 is configured by a rectangular frame member 42, and a housing 44 attached to the frame member 42, and the charging ports 16 are attached to a bottom wall 4402 of the housing 44.

A charging gun is detachably coupled to either of the charging ports 16 to charge the battery. Specifically, either of the charging ports 16 is connected to a charging device through a charging cable, and the charging device charges the battery with the electric power which is supplied from the charging port 16 through the charging cable. In the embodiment, the charging device is placed in the front space 20, and the charging cable is laid along the inner panel 26 to the rear end of the inner panel 26, and, from the rear end of the inner panel 26, then passed through the front space 20 to be connected to the charging device.

The frame member 42 is placed in a portion matching the charge opening 34, and attached by welding to a cross member 2602 (Fig. 2) which constitutes the inner panel 26, and which elongates in the vehicle width direction.

The frame member 42 has a bottom wall 4202 having a rectangular frame like shape, a sidewall 4204 which rises from the circumference of the bottom wall 4202, and a flange 4206 which is disposed on the upper end of the sidewall 4204, and which has a rectangular frame like shape.

The flange 4206 has a front flange portion 4206A which is located in the front of the vehicle body 12, and which elongates in the vehicle width direction. A recess 4208 which is downward displaced is disposed in an intermediate portion in the longitudinal direction of the front flange portion 4206A.

The lid member 36 opens and closes the charge opening 34.

In the lid member 36, a rear end portion is attached to the frame member 42 through hinges 46. Therefore, the lid member 36 is attached to the hood 14.

The lid member 36 is disposed so as to be swingable between a closing position where the charge opening 34 is closed, and an opening position where the charge opening 34 is opened, through the hinges 46.

A striker 48 which elongates in the vehicle longitudinal direction is disposed in the middle in the vehicle width direction of the lower surface of the front portion of the lid member 36. The striker 48 is formed by a rod member.

Rubber-made cushion members 50 which, at the closing position where the charge opening 34 is closed by the lid member 36, butt against the bottom wall 4202 of the frame member 42 are disposed on the both sides in the vehicle width direction of the lower surface of the front portion of the lid member 36.

Each of the hinges 46 is configured by: a first spring plate 4602 which is attached to the sidewall 4204 extending in the vehicle width direction in the rear side of the frame member 42; a second spring plate 4604 which is attached to the lower surface of the lid member 36 in the vicinity of its rear end; a pin 4606 in which the axis is directed in the vehicle width direction, and which swingably couples the spring plates 4602, 4604 to each other; and a third spring plate 4608 which is attached to the first spring plate 4602.

At the closing position of the lid member 36, tip end portions of the third spring plates 4608 engage with concave portions of the second spring plates 4604, and the lid member 36 is urged to the closing position by the elastic forces of the third spring plates 4608.

When the lid member 36 is moved from the closing position toward the opening position and its angle exceeds a predetermined value, the third spring plates 4608 urge the lid member 36 toward the opening position, and the lid member 36 is set to the opening position in a state where the tip end portions of the third spring plates 4608 override convex portions of the second spring plates 4604.

When the lid member 36 is moved from the opening position toward the closing position and its angle drops below a predetermined value, the third spring plates 4608 urge the lid member 36 toward the closing position, and, at the closing position of the lid member 36, the tip end portions of the third spring plates 4608 engage with the concave portions of the second spring plates 4604 to hold the state where the lid member 36 is located at the closing position.

The configuration of the hinges 46 is not limited to that described above, and any of various known conventional configurations may be employed.

The lid member locking means 38 locks and unlocks the state where the charge opening 34 is closed by the lid member 36. In other words, the lid member locking means locks the lid member 36 to the opening/closing member in the closed state.

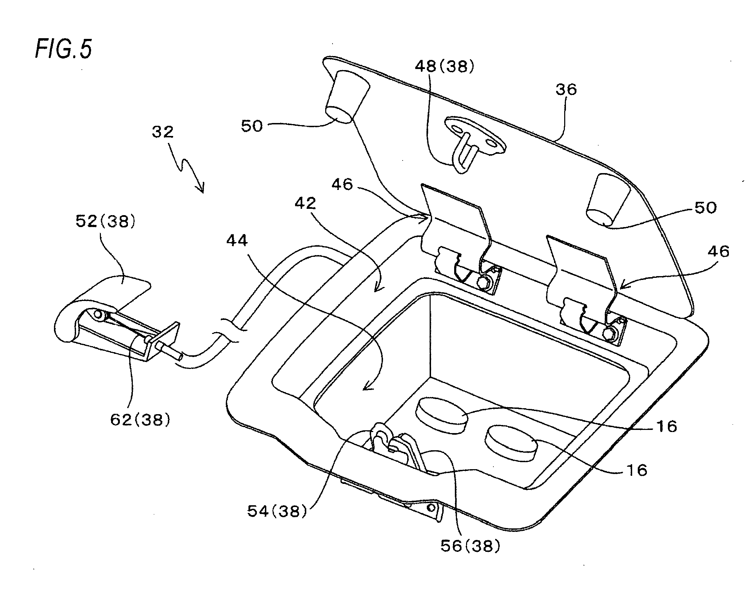

As shown in Figs. 5 to 9, the lid member locking means 38 includes a lid opening operating lever 52, a first swing lever 54, a second swing lever 56, the striker 48, a torsion spring 58, a tension spring 60, and a lid opening cable wire 62.

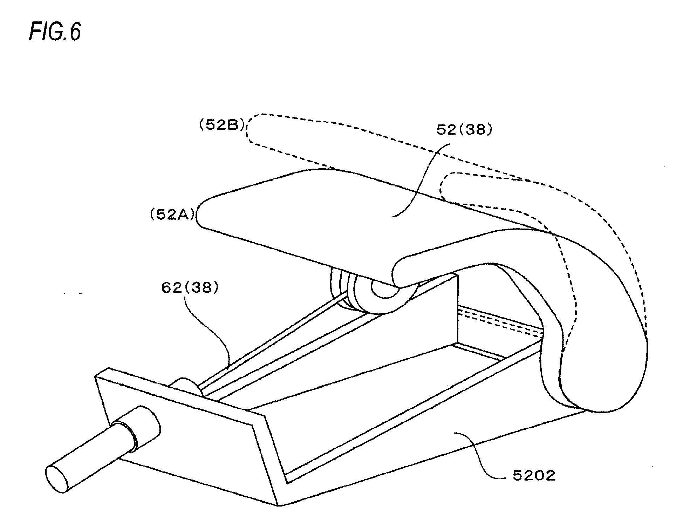

As shown in Fig. 6, the lid opening operating lever 52 is operated when locking of the lid member 36 to the closing position is to be cancelled, and swingably disposed through a bracket 5202 in the vehicle cabin.

The lid opening operating lever 52 is swingable between an initial position (52A) and an opening position (52B), and usually located at the initial position (52A).

In the embodiment, the lid opening operating lever 52 corresponds to the lid member locking operating unit for operating the lid member locking means 38.

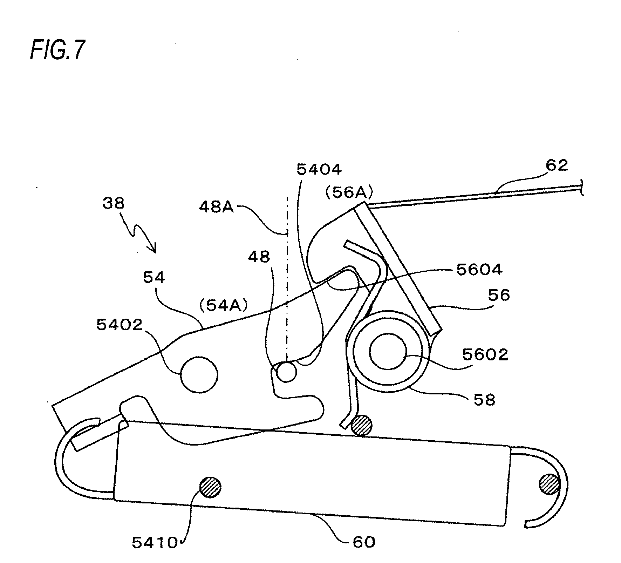

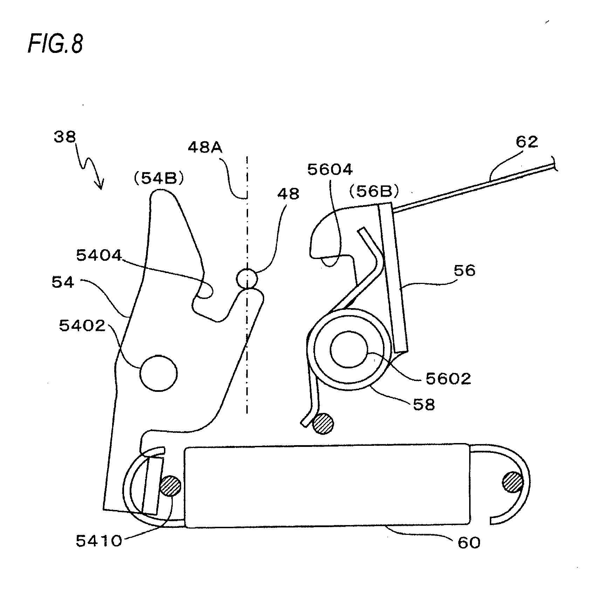

As shown in Figs. 7 and 8, the first swing lever 54 is placed in the front end of the charge opening 34, and on the left side of a locus 48A of the striker 48 as viewed from the front side of the vehicle body 12.

The first swing lever 54 is swingably supported by a support shaft 5402 in which the axis is directed in the longitudinal direction of the vehicle body 12. The support shaft 5402 is attached to the sidewall 4204 or bottom wall 4202 which extends in the vehicle width direction, in the front side of the frame member 42.

The first swing lever 54 includes an engaging groove 5404 which engages with and disengages from the striker 48.

The first swing lever 54 is swingable between a locking position (54A) where the closed state in which the striker 48 is held in the engaging groove 5404 and the charge opening 34 is closed by the lid member 36 is locked as shown in Fig. 7, and an unlocking position (54B) where, as shown in Fig. 8, the front portion of the lid member 36 is raised from the closed state by a degree which allows the fingers to be inserted.

The tension spring 60 is stretched between the first swing lever 54 and the frame member 42 to urge the first swing lever 54 toward the unlocking position (54B). When the first swing lever 54 butts against a stopper 5410 as shown in Fig. 8, the lever is at the unlocking position (54B).

As shown in Figs. 7 and 8, the second swing lever 56 is placed in the front end of the charge opening 34, and on the right side of the locus 48A of the striker 48 as viewed from the front side of the vehicle body 12.

The second swing lever 56 is swingably supported by a support shaft 5602 in which the axis is directed in the longitudinal direction of the vehicle body 12. The support shaft 5602 is attached to the sidewall 4204 or bottom wall 4202 which extends in the vehicle width direction, in the front side of the frame member 42.

An engaging claw 5604 which engages with and disengages from the first swing lever 54 is disposed in the second swing lever 56.

The second swing lever 56 and the lid opening operating lever 52 are coupled with each other by the lid opening cable wire 62.

The second swing lever 56 is swingable between a locking position (56A) where the engaging claw 5604 engages with the first swing lever 54 located at the locking position (54A) as shown in Fig. 7, to hold the first swing lever 54 at the locking position (54A), and an unlocking position (56B) where the engaging claw 5604 disengages from the first swing lever 54 located at the locking position (54A) as shown in Fig. 8, to allow the first swing lever 54 to swing from the locking position (54A) to the unlocking position (54B).

The torsion spring 58 is stretched between the second swing lever 56 and the frame member 42 to urge the second swing lever 56 toward the locking position (56A).

At the initial position (52A) of the lid opening operating lever 52, the second swing lever 56 is located at the locking position (56A), and, when the lid opening operating lever 52 is swung from the initial position (52A) to the opening position (52B), the second swing lever 56 is set to the unlocking position (56B) as shown in Fig. 8.

When the second swing lever 56 is at the unlocking position (56B), the first swing lever 54 is swung from the locking position (54A) to the unlocking position (54B) by the elastic force of the tension spring 60, and pushes up the striker 48 to set the lid member 36 to the half-opened state, whereby a gap into which the fingers can be inserted is formed below the front portion of the lid member 36. In the embodiment, the recess 4208 is disposed in the frame member 42. In this case, therefore, the fingers can be easily inserted below the front portion of the lid member 36.

When the fingers are inserted below the front portion of the lid member 36 and the lid member 36 is pushed up, the lid member 36 is set to the opening position, and the opening position of the lid member 36 is held by the elastic forces of the third spring plates 4608 of the hinges 46, so that the battery can be charged by the charging gun through the charging port 16.

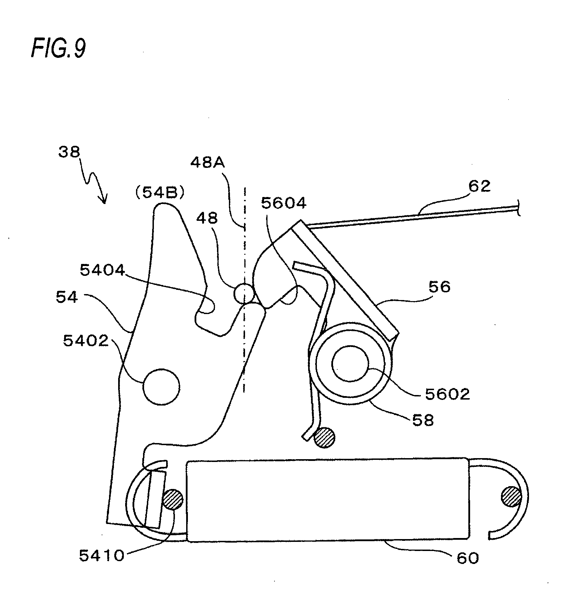

By contrast, when the first swing lever 54 is swung from the locking position (54A) to the unlocking position (54B) and the fingers are separated from the lid opening operating lever 52, the second swing lever 56 is moved by the elasticity of the torsion spring 58 in the direction along which the lever returns to the locking position (56A), and, as shown in Fig. 9, set to an intermediate position where the tip end of the engaging claw 5604 butts against the first swing lever 54 which is located at the unlocking position (54B).

After the battery is charged, when the lid member 36 is swung from the opening position to the closing position, the second swing lever 56 is swung by the striker 48 in the direction along which the second swing lever separates from the locus 48A of the striker 48, then butts against the striker 48 from the upper side of the striker 48, and is swung toward the locking position (56A) along the striker 48.

On the other hand, the striker 48 enters the engaging groove 5404 to cause the first swing lever 54 to be swung toward the locking position (54A), and, by the swinging of the first swing lever 54, the second swing lever 56 is swung in the direction along which the second swing lever separates from the locus 48A of the striker 48.

At the timing when the engaging claw 5604 overrides the first swing lever 54, the striker 48 engages with the engaging groove 5404, the engaging claw 5604 engages with the first swing lever 54, and the first swing lever 54 and the second swing lever 56 are set to the locking positions (54A), (56A) shown in Fig. 7.

The configuration of the lid member locking means 38 is not limited to that described above, and any of various known conventional configurations may be employed.

According to the embodiment, the charge opening 34 and the lid member 36 are disposed in the hood 14, and the charging port 16 is placed in the charge opening 34. In the case where the charging unit structure 32 is applied to the existing vehicle body 12, therefore, it is requested only to change the design of the hood 14, and hence the change in the design of the front portion of the vehicle body can be suppressed to the minimum. This is advantageous in suppressing the design cost.

Furthermore, the charge opening 34 is disposed in the hood 14, and the lid member 36 which opens and closes the charge opening 34 is disposed in the hood 14. Therefore, the positioning of the charge opening 34 and the lid member 36 can be performed easily and correctly. This is advantageous in improving the assembling property of the charging unit structure 32.

In the embodiment, also the charging port 16 is disposed in the hood 14 in addition to the charge opening 34 and the lid member 36. Therefore, it is requested only to install the two members or the lid member 36 and the charging port 16 in the hood 14 while correctly maintaining the positional relationship between the charge opening 34, the lid member 36, and the charging port 16. This is more advantageous in improving the assembling property of the charging unit structure 32.

### (Second embodiment)

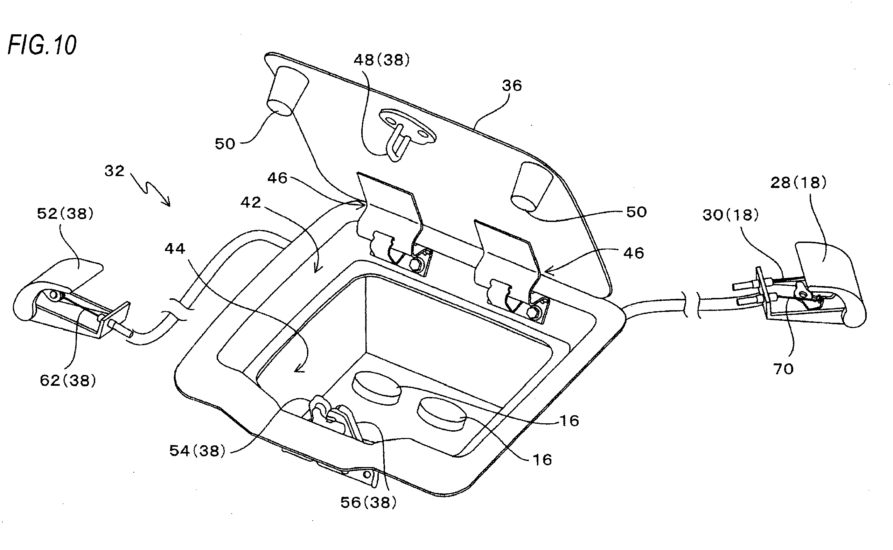

Next, a second embodiment will be described with reference to Figs. 10 to 14. In the following embodiments, portions and members which are similar to those of the first embodiment are denoted by the same reference numerals, and their description is omitted.

In the second embodiment, first unlocking prohibiting means 64 is provided in the first embodiment.

When the charge opening 34 is closed, the first unlocking prohibiting means 64 allows unlocking to be performed by the hood locking means 18 (opening/closing member locking means), and, when the charge opening 34 is opened, prohibits unlocking from being performed by the hood locking means 18.

When the lid member 36 is in the unlocked state, namely, the first unlocking prohibiting means 64 prohibits unlocking of the opening/closing member locking means. In the second embodiment, the first unlocking prohibiting means 64 operates in conjunction with the lid member locking means 38 to suppress the operation of the hood opening operating lever 28 (opening/closing member locking operating unit).

The first unlocking prohibiting means 64 includes an engagement plate 66 and a hood opening prohibiting lever 68.

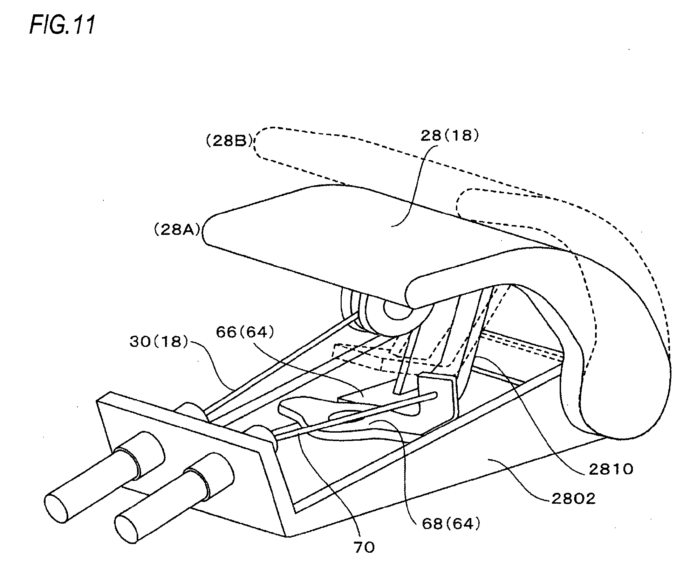

As shown in Fig. 11, the engagement plate 66 is disposed in the lower end of a leg plate 2810 which is projected from the rear surface of the hood opening operating lever 28.

When the hood opening operating lever 28 is at the initial position (28A), the engagement plate 66 is parallel to the bottom surface of the bracket 2802 and located at an initial position which is in a portion on the bottom surface, and, when the hood opening operating lever 28 is at the opening position (28B), located in a portion which is separated from the bottom surface of the bracket 2802.

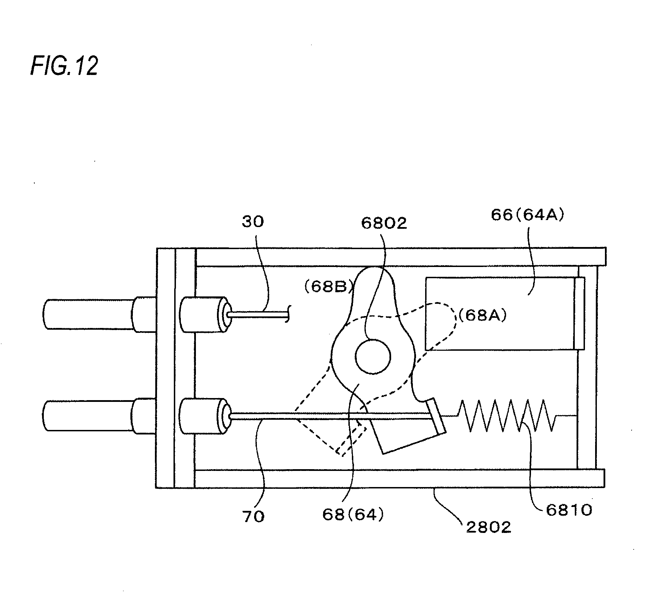

As shown in Fig. 12, the hood opening prohibiting lever 68 is swingably disposed on the bottom surface of the bracket 2802 through a support shaft 6802.

One end of the hood opening prohibiting lever 68 is swingably disposed between a hood opening prohibiting position (68A) which is located on the engagement plate 66 located at the initial position, and a retracting position (68B) which is retracted from the locus of the engagement plate 66, and urged toward the retracting position (68B) by a tension spring 6810.

When the engagement plate 66 attempts to separate in the direction along which the plate separates from the bottom surface in the state where the hood opening prohibiting lever 68 is located at the hood opening prohibiting position (68A), the plate butts against the one end of the hood opening prohibiting lever 68, and therefore the hood opening operating lever 28 cannot be swung from the initial position (28A) to the opening position (28B).

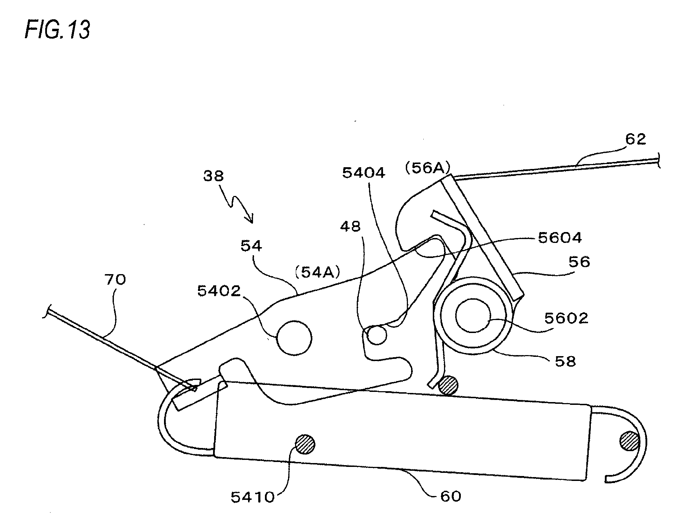

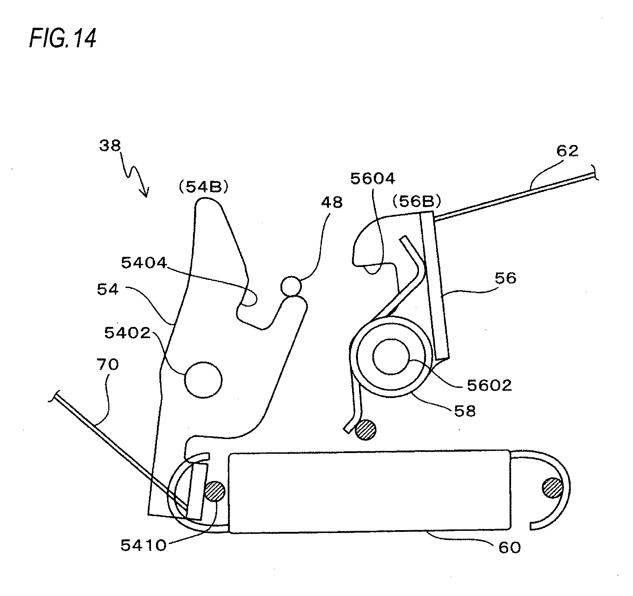

As shown in Figs. 13 and 14, the other end of the hood opening prohibiting lever 68 is coupled to the first swing lever 54 of the lid member locking means 38 through a hood opening prohibiting cable wire 70, and disposed so that, in the state where the lid member 36 is located at the opening position, the hood opening prohibiting lever 68 is caused to be located at the hood opening prohibiting position (68A) by the first swing lever 54 located at the unlocking position (54B), and, in the state where the lid member 36 is located at the closing position, the hood opening prohibiting lever 68 is caused to be located at the retracting position (68B) by the first swing lever 54 located at the locking position (54A).

The operation of the first unlocking prohibiting means 64 will be described.

When the charge opening 34 is closed by the lid member 36, and the upper-end opening 22 is closed by the hood 14, the engagement plate 66 is located at the initial position, the hood opening prohibiting lever 68 is located at the retracting position (68B), and therefore it is allowed to move the hood opening operating lever 28 from the initial position (28A) to the opening position (28B). When the charge opening 34 is closed by the lid member 36, namely, unlocking by the hood locking means 18 (opening/closing member locking means) is allowed, and the hood 14 can be opened.

By contrast, when the charge opening 34 is opened, and the upper-end opening 22 is closed by the hood 14, the engagement plate 66 is located at the initial position, the hood opening prohibiting lever 68 is located at the hood opening prohibiting position (68A), and therefore the hood opening operating lever 28 is prohibited from being moved from the initial position (28A) to the opening position (28B). When the charge opening 34 is opened, namely, unlocking by the hood locking means 18 (opening/closing member locking means) is prohibited, and the hood 14 cannot be opened.

According to the second embodiment, by the first unlocking prohibiting means 64, the hood 14 is prohibited from being opened in the state where the lid member 36 is opened, and therefore the charging gun during the charging operation, and the hood 14 can be prevented from butting against each other to damage the hood 14.

The first unlocking prohibiting means 64 is not limited to have the configuration of the embodiment, and may have any of various configurations such as those where, when the charge opening 34 is opened, a stopper butts against the surface of the hood opening operating lever 28, and where a lever for prohibiting movement of the striker is disposed in the latch unit of the hood locking means 18.

### (Third embodiment)

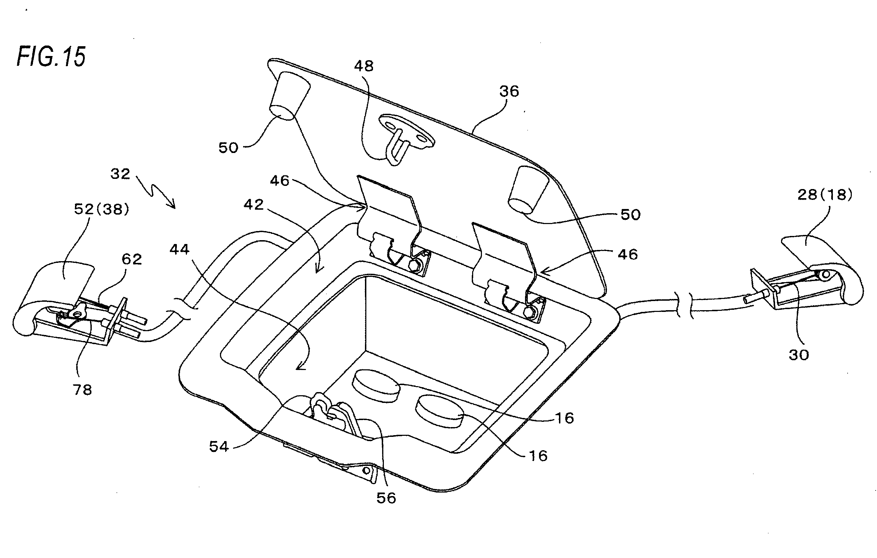

Next, a third embodiment will be described with reference to Figs. 15 to 17.

In the third embodiment, second unlocking prohibiting means 72 is provided in the first embodiment.

When the upper-end opening 22 is closed, the second unlocking prohibiting means 72 allows unlocking to be performed by the lid member locking means 38, and, when the upper-end opening 22 is opened, prohibits unlocking from being performed by the lid member locking means 38.

When the hood locking means 18 (opening/closing member locking means) is in an unlocking state, namely, the second unlocking prohibiting means 72 prohibits unlocking of the lid member 36. In the third embodiment, the second unlocking prohibiting means 72 operates in conjunction with the hood locking means 18 (opening/closing member locking means) to suppress the operation of the lid opening operating lever 52 (lid member locking operating unit).

The second unlocking prohibiting means 72 includes an engagement plate 74 and a lid opening prohibiting lever 76.

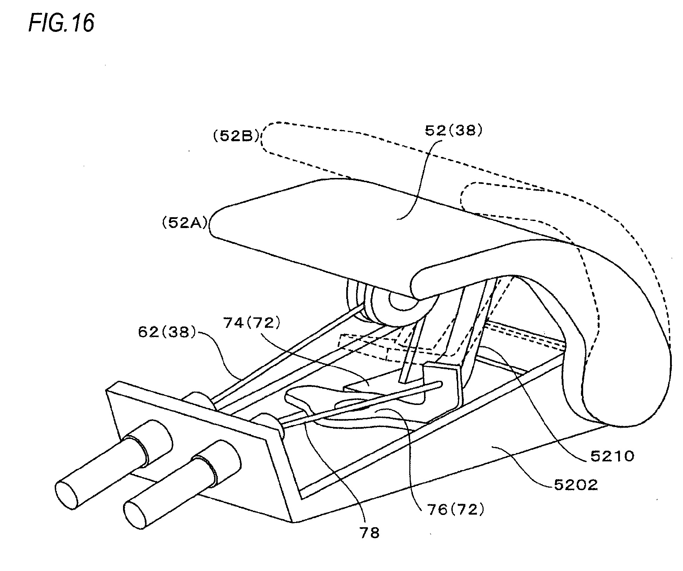

As shown in Fig. 16, the engagement plate 74 is disposed in the lower end of a leg plate 5210 which is projected from the rear surface of the lid opening operating lever 52.

When the lid opening operating lever 52 is at the initial position (52A), the engagement plate 74 is parallel to the bottom surface of the bracket 5202 and located at an initial position which is in a portion on the bottom surface, and, when the lid opening operating lever 52 is at the opening position (52B), located in a portion which is separated from the bottom surface of the bracket 5202.

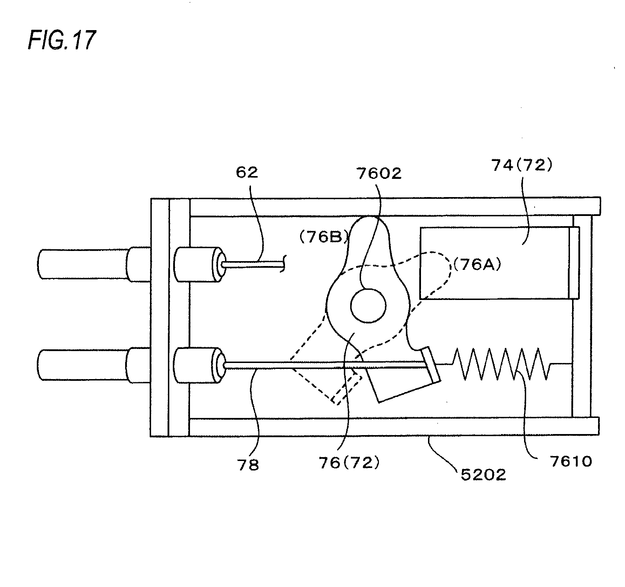

As shown in Fig. 17, the lid opening prohibiting lever 76 is swingably disposed on the bottom surface of the bracket 5202 through a support shaft 7602.

One end of the lid opening prohibiting lever 76 is swingably disposed between a lid opening prohibiting position (76A) which is located on the engagement plate 74 located at the initial position, and a retracting position (76B) which is retracted from the locus of the engagement plate 74, and urged toward the retracting position (76B) by a tension spring 7610.

When the engagement plate 74 attempts to separate in the direction along which the plate separates from the bottom surface in the state where the lid opening prohibiting lever 76 is located at the lid opening prohibiting position (76A), the plate butts against the one end of the lid opening prohibiting lever 76, and therefore the lid opening operating lever 52 cannot be swung from the initial position (52A) to the opening position (52B).

The other end of the lid opening prohibiting lever 76 is coupled to a latch unit (not shown) of the hood locking means 18 through a lid opening prohibiting cable wire 78, and disposed so that, in the state where the hood 14 is located at the opening position, the lid opening prohibiting lever 76 is caused to be located at the lid opening prohibiting position (76A) by the latch unit (not shown), and, in the state where the hood 14 is located at the closing position, the lid opening prohibiting lever 76 is caused to be located at the retracting position (76B) by the latch unit (not shown).

The operation of the second unlocking prohibiting means 72 will be described.

When the upper-end opening 22 is closed by the hood 14, and the charge opening 34 is closed by the lid member 36, the engagement plate 74 is located at the initial position, the lid opening prohibiting lever 76 is located at the retracting position (76B), and therefore it is allowed to move the lid opening operating lever 52 from the initial position (52A) to the opening position (52B). When the upper-end opening 22 is closed by the hood 14, namely, unlocking by the lid member locking means 38 is allowed, and the lid member 36 can be opened.

By contrast, when the upper-end opening 22 is opened, and the charge opening 34 is closed by the lid member 36, the engagement plate 74 is located at the initial position, the lid opening prohibiting lever 76 is located at the lid opening prohibiting position (76A), and therefore the lid opening operating lever 52 is prohibited from being moved from the initial position (52A) to the opening position (52B). When the upper-end opening 22 is opened, namely, unlocking by the lid member locking means 38 is prohibited, and the lid member 36 cannot be opened.

According to the third embodiment, by the second unlocking prohibiting means 72, the lid member 36 is prohibited from being opened in the state where the hood 14 is opened. This is advantageous in preventing an erroneous operation of the lid opening operating lever 52.

The second unlocking prohibiting means 72 is not limited to have the configuration of the embodiment, and may have any of various configurations such as those where, when the upper-end opening 22 is opened, a stopper butts against the surface of the lid opening operating lever 52, and where a lever for prohibiting movement of the striker 48 is disposed in the lid member locking means 38.

To the first embodiment, for example, only the second embodiment may be added, or only the third embodiment may be added. Alternatively, both the second and third embodiments may be added to the first embodiment.

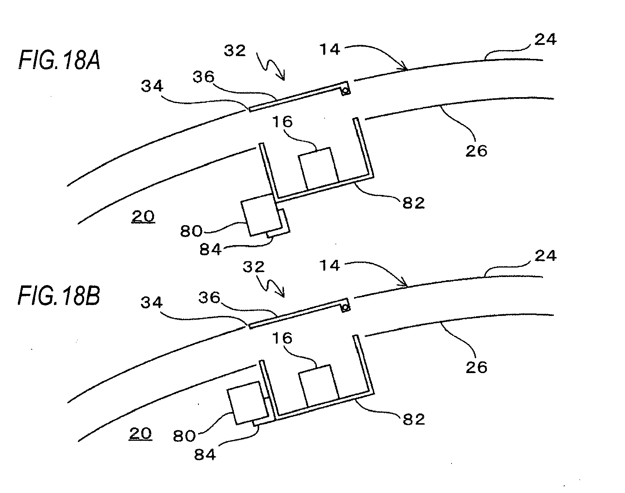

The embodiments have been described by exemplifying the case where all the charge opening, the charging port 16, and the lid member 36 are disposed in the opening/closing member. Alternatively, the charging port 16 may be disposed in a member on the side of the vehicle body as shown in Figs. 18A and 18B.

In the alternative, as shown in Fig. 18A, for example, a housing 82 in which the upper side is opened may be attached by using a member 80 placed in the front space 20, and the charging port 16 may be supported by the housing 82. Alternatively, as shown in Fig. 18B, the housing 82 may be attached by using a supporting member 84 for supporting the member 80 placed in the front space 20, and the charging port 16 may be supported by the housing 82.

Even in the case where the charging port 16 is disposed in a member on the side of the vehicle body as described above, when the charging unit structure 32 is to be applied to the existing vehicle body 12, it is requested only to change the design of the hood 14. Therefore, the change in the design of the front portion of the vehicle body can be suppressed to the minimum. This is advantageous in suppressing the design cost.

The charge opening 34 is disposed in the hood 14, and the lid member 36 for opening and closing the charge opening 34 is disposed in the hood 14. Therefore, the positioning of the charge opening 34 and the lid member 36 can be performed easily and correctly, and that of the charge opening 34 and the charging port can be performed easily and correctly. This is advantageous in improving the assembling property of the charging unit structure 32.

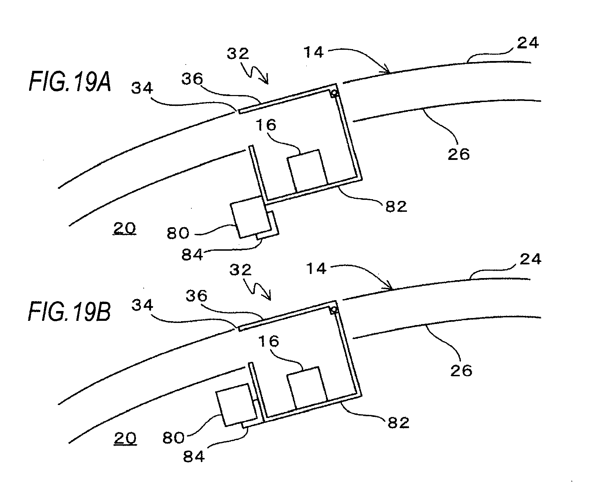

The embodiments have been described by exemplifying the case where all the charge opening, the charging port 16, and the lid member 36 are disposed in the opening/closing member. Alternatively, the lid member 36 and the charging port 16 may be disposed in a member on the side of the vehicle body as shown in Figs. 19A and 19B.

In the alternative, as shown in Fig. 19A, for example, the housing 82 in which the upper side is opened may be attached by using the member 80 placed in the front space 20, and the lid member 36 and the charging port 16 may be supported by the housing 82. Alternatively, as shown in Fig. 19B, the housing 82 may be attached by using the supporting member 84 for supporting the member 80 placed in the front space 20, and the lid member 36 and the charging port 16 may be supported by the housing 82.

Even in the case where the lid member 36 and the charging port 16 are disposed in a member on the side of the vehicle body as described above, when the charging unit structure 32 is to be applied to the existing vehicle body 12, it is requested only to perform a change in the design of the hood 14 in which the charge opening 34 is disposed in the hood 14. Therefore, the change in the design of the front portion of the vehicle body can be suppressed to the minimum. This is advantageous in suppressing the design cost.

The charge opening 34 is disposed in the hood 14, and the lid member 36 for opening and closing the charge opening 34, and the charging port 16 are disposed in the member on the side of the vehicle body 12. Therefore, it is requested that the positioning of the charge opening 34 of the hood 14 which is located at the closing position, and the lid member 36 is performed, and the housing is then installed to the member or the supporting member. The positioning of the charge opening 34 and the lid member 36 can be performed easily and correctly. This is advantageous in improving the assembling property of the charging unit structure 32.

The embodiments have been described by exemplifying the case where the opening/closing member to which the charging unit structure 32 is applied is the hood 14. Alternatively, the charging unit structure 32 of the invention may be applied also to a door which opens and closes a doorway.

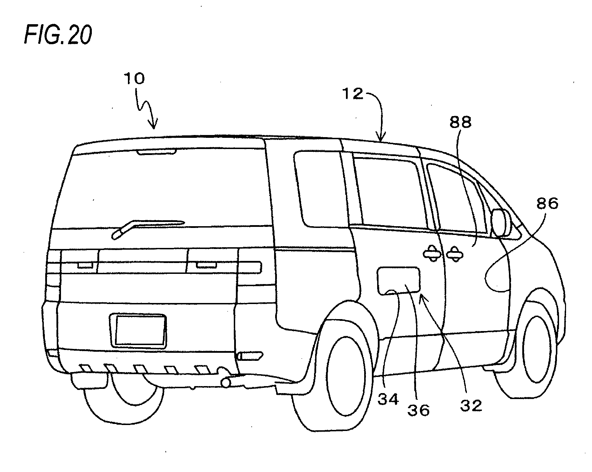

As shown in Fig. 20, the opening of the vehicle body 12 may be a doorway 86 for the vehicle cabin, and the opening/closing member may be a door 88 which opens and closes the doorway 86. Also in this case, similar effects as the embodiments are attained.

The charging unit structure 32 of the invention may be applied also to a trunk lid which opens and closes an article carry in/out port.

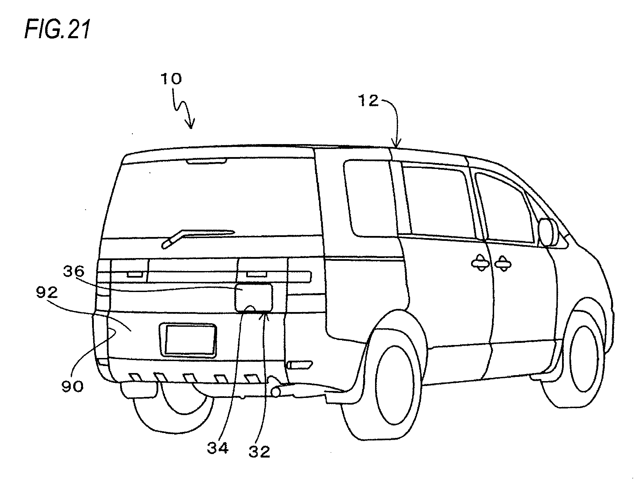

As shown in Fig. 21, the opening of the vehicle body 12 may be an article carry in/out port 90 for an article storage compartment, and the opening/closing member may be a trunk lid 92 which opens and closes the article carry in/out port 90. Also in this case, similar effects as the embodiments are attained.

In the embodiments, the hood opening operating lever 28 and the lid opening operating lever 52 are used. The levers may be replaced with switches which are electrically connected, and the hood locking means 18 (opening/closing member locking means) and the lid member locking means 38 may be devices which perform unlocking in response to signals supplied from the above-described switches. When the lid member 36 is unlocked, the operation of the hood opening operating switch may be invalidated, thereby prohibiting the lid from being opened, or, when the hood 14 is unlocked, the operation of the lid opening operating switch may be invalidated, whereby similar effects as the embodiments can be attained.

## Claims

1. A charging unit structure (32) for an electrically driven vehicle (10), the charging unit structure (32) comprising:
an opening/closing member which is configured to open and close an opening (22) of a vehicle body (12); a battery which is configured to supply electric power to a running motor; and a charging port (16) through which charging of the battery is performed, the charging unit structure (32)
comprising:
a charge opening (34) which is disposed in the opening/closing member, and in which the charging port (16) is placed;
a lid member (36) which is configured to open and close the charge opening (34);
opening/closing member locking means (18) for locking the opening/closing member to the vehicle body (12) in a state where the opening/closing member closes the opening (22) of the vehicle body (12); **characterized in that** it further comprises:
a lid member locking means (38) for locking the lid member (36) to the opening/closing member in a state where the lid member (36) closes the charge opening (34); and
an unlocking prohibiting means (64) for, when the lid member (36) is in an unlocked state, prohibiting unlocking the opening/closing member by the opening/closing member locking means (18).

2. A charging unit structure (32) for an electrically driven vehicle (10), the charging unit structure (32) comprising:
an opening/closing member which is configured to open and close an opening (22) of a vehicle body (12); a battery which is configured to supply electric power to a running motor; and a charging port (16) through which charging of the battery is performed, the charging unit structure (32)
comprising:
a charge opening (34) which is disposed in the opening/closing member, and in which the charging port (16) is placed;
a lid member (36) which is configured to open and close the charge opening (34);
opening/closing member locking means (18) for locking the opening/closing member to the vehicle body (12) in a state where the opening/closing member closes the opening (22) of the vehicle body (12); in that it further comprises:
a lid member locking means (38) for locking the lid member (36) to the opening/closing member in a state where the lid member (36) closes the charge opening (34); and
an unlocking prohibiting means (72) for, when the opening/closing member locking means is in an unlocked state, prohibiting unlocking of the lid member (36) by the lid member locking means (38).

3. The charging unit structure according to claim 1, **characterized in that**
the vehicle (10) includes an opening/closing member locking operating unit which is configured to operate the opening/closing member locking means (18), and
the unlocking prohibiting means (46) operates in conjunction with the lid member locking means (38) to suppress an operation of the opening/closing member locking operating unit.

4. The charging unit structure according to claim 2, **characterized in that**
the vehicle (10) includes a lid member locking operating unit which is configured to operate the lid member locking means (38), and
the unlocking prohibiting means (72) operates in conjunction with the opening/closing member locking means (18) to suppress an operation of the lid member locking operating unit.

5. The charging unit structure according to any one of claims 1 to 4, **characterized in that**
the opening of the vehicle body (12) is an upper-end opening (22) that is opened above a front space formed in front of a dash panel, and
the opening/closing member is a hood (14) which is configured to open and close the upper-end opening (22).

6. The charging unit structure according to any one of claims 1 to 4, **characterized in that**
the opening of the vehicle body (12) is a doorway (86), and the opening/closing member is a door (88) which is configured to open and close the doorway (86).

7. The charging unit structure according to any one of claims 1 to 4, **characterized in that**
the opening of the vehicle body (12) is an article carry in/out port (90), and
the opening/closing member is a trunk lid which is configured to open and close the article carry in/out port (90).

## Patentansprüche

1. Ladeeinheitsstruktur (32) für ein elektrisch angetriebenes Fahrzeug (10), wobei die Ladeeinheitsstruktur (32) aufweist:
ein Öffnungs-/Schließelement, das konfiguriert ist, eine Öffnung (22) einer Fahrzeugkarosserie (12) zu öffnen und zu schließen; eine Batterie, die konfiguriert ist, elektrischen Strom an einen Fahrmotor zu liefern; und einen Ladeanschluss (16), durch den das Laden der Batterie durchgeführt wird, wobei die Ladeeinheitsstruktur (32) aufweist:
eine Ladeöffnung (34), die im Öffnungs-/Schließelement angeordnet ist und in der der Ladeanschluss (16) angeordnet ist;
ein Deckelelement (36), das konfiguriert ist, die Ladeöffnung (34) zu öffnen und zu schließen;
ein Öffnungs-/Schließelement-Verriegelungsmittel (18) zum Verriegeln des Öffnungs-/Schließelements an der Fahrzeugkarosserie (12) in einem Zustand, in dem das Öffnungs-/Schließelement die Öffnung (22) der Fahrzeugkarosserie (12) verschließt; **dadurch gekennzeichnet, dass** sie ferner aufweist:
ein Deckelelement-Verriegelungsmittel (38) zum Verriegeln des Deckelelements (36) am Öffnungs-/Schließelement in einem Zustand, in dem das Deckelelement (36) die Ladeöffnung (34) verschließt; und
ein Entriegelungsverhinderungsmittel (64) zum Verhindern des Entriegelns des Öffnungs-/Schließelements durch das Öffnungs-/Schließelement-Verriegelungsmittel (18), wenn sich das Deckelelement (36) in einem unverriegelten Zustand befindet.

2. Ladeeinheitsstruktur (32) für ein elektrisch angetriebenes Fahrzeug (10), wobei die Ladeeinheitsstruktur (32) aufweist:
ein Öffnungs-/Schließelement, das konfiguriert ist, eine Öffnung (22) einer Fahrzeugkarosserie (12) zu öffnen und zu schließen; eine Batterie, die konfiguriert ist, elektrischen Strom an einen Fahrmotor zu liefern; und einen Ladeanschluss (16), durch den das Laden der Batterie durchgeführt wird, wobei die Ladeeinheitsstruktur (32) aufweist:
eine Ladeöffnung (34), die im Öffnungs-/Schließelement angeordnet ist und in der der Ladeanschluss (16) angeordnet ist;
ein Deckelelement (36), das konfiguriert ist, die Ladeöffnung (34) zu öffnen und zu schließen;
ein Öffnungs-/Schließelement-Verriegelungsmittel (18) zum Verriegeln des Öff-nungs-/Schließelements an der Fahrzeugkarosserie (12) in einem Zustand, in dem das Öffnungs-/Schließelement die Öffnung (22) der Fahrzeugkarosserie (12) verschließt; **dadurch gekennzeichnet, dass** sie ferner aufweist:
ein Deckelelement-Verriegelungsmittel (38) zum Verriegeln des Deckelelements (36) am Öffnungs-/Schließelement in einem Zustand, in dem das Deckelelement (36) die Ladeöffnung (34) verschließt; und
ein Entriegelungsverhinderungsmittel (72) zum Verhindern des Entriegelns des Deckelelements (36) durch das Deckelelement-Verriegelungsmittel (38), wenn sich das Öffnungs-/Schließelement-Verriegelungsmittel in einem unverriegelten Zustand befindet.

3. Ladeeinheitsstruktur nach Anspruch 1, **dadurch gekennzeichnet, dass**
das Fahrzeug (10) eine Öffnungs-/Schließelement-Verriegelungsbetätigungseinheit aufweist, die konfiguriert ist, das Öffnungs-/Schließelement-Verriegelungsmittel (18) zu betätigen, und
das Entriegelungsverhinderungsmittel (46) in Verbindung mit dem Deckelelement-Verriegelungsmittel (38) arbeitet, um eine Betätigung der Öffnungs-/Schließelement-Verriegelungsbetätigungseinheit zu unterbinden.

4. Ladeeinheitsstruktur nach Anspruch 2, **dadurch gekennzeichnet, dass**
das Fahrzeug (10) eine Deckelelement-Verriegelungsbetätigungseinheit aufweist, die konfiguriert ist, das Deckelelement-Verriegelungsmittel (38) zu betätigen, und das Entriegelungsverhinderungsmittel (72) in Verbindung mit dem Öffnungs-/Schließ-element-Verriegelungsmittel (18) arbeitet, um eine Betätigung der Deckelelement-Verriegelungsbetätigungseinheit zu unterbinden.

5. Ladeeinheitsstruktur nach einem der Ansprüche 1 bis 4, **dadurch gekennzeichnet, dass**
die Öffnung der Fahrzeugkarosserie (12) eine obere Endöffnung (22) ist, die über einem vorderen Raum geöffnet wird, der vor einer Instrumententafel ausgebildet ist,
und
das Öffnungs-/Schließelement eine Haube (14) ist, die konfiguriert ist, die obere End-öffnung (22) zu öffnen und zu schließen.

6. Ladeeinheitsstruktur nach einem der Ansprüche 1 bis 4, **dadurch gekennzeichnet, dass**
die Öffnung der Fahrzeugkarosserie (12) eine Türöffnung (86) ist, und das Öffnungs-/Schließelement eine Tür (88) ist, die konfiguriert ist, die Türöffnung (86) zu öffnen und zu schließen.

7. Ladeeinheitsstruktur nach einem der Ansprüche 1 bis 4, **dadurch gekennzeichnet, dass**
die Öffnung der Fahrzeugkarosserie (12) eine Artikeleinbringungs-/Ausführungsöffnung (90) ist, und
das Öffnungs-/Schließelement eine Heckklappe ist, die konfiguriert ist, die Artikeleinbringungs-/Ausführungsöffnung (90) zu öffnen und zu schließen.

## Revendications

1. Structure d'unité de charge (32) pour un véhicule à motorisation électrique (10), ladite structure d'unité de charge (32) comprenant :
un élément d'ouverture/de fermeture prévu pour ouvrir et fermer une ouverture (22) dans une caisse (12) de véhicule ; une batterie prévue pour alimenter en courant électrique un moteur en fonctionnement ; et un port de charge (16) par lequel la charge de la batterie est exécutée, ladite structure d'unité de charge (32) comprenant :
une ouverture de charge (34) ménagée dans l'élément d'ouverture/de fermeture, et dans laquelle le port de charge (16) est monté ;
un élément de couvercle (36) prévu pour ouvrir et fermer l'ouverture de charge (34) ;
un moyen de verrouillage (18) d'élément d'ouverture/de fermeture destiné à verrouiller l'élément d'ouverture/de fermeture sur la caisse (12) de véhicule dans un état où l'élément d'ouverture/de fermeture ferme l'ouverture (22) de la caisse (12) de véhicule ;
**caractérisé en ce qu'**il comprend en outre :
un moyen de verrouillage (38) d'élément de couvercle destiné à verrouiller l'élément de couvercle (36) sur l'élément d'ouverture/de fermeture dans un état où l'élément de couvercle (36) ferme l'ouverture de charge (34) ; et
un moyen d'opposition au déverrouillage (64) destiné à empêcher le déverrouillage de l'élément d'ouverture/de fermeture par le moyen de verrouillage (18) d'élément d'ouverture/de fermeture quand l'élément de couvercle (36) est en état déverrouillé.

2. Structure d'unité de charge (32) pour un véhicule à motorisation électrique (10), ladite structure d'unité de charge (32) comprenant :
un élément d'ouverture/de fermeture prévu pour ouvrir et fermer une ouverture (22) d'une caisse (12) de véhicule ; une batterie prévue pour alimenter en courant électrique un moteur en fonctionnement ; et un port de charge (16) par lequel la charge de la batterie est exécutée, ladite structure d'unité de charge (32) comprenant :
une ouverture de charge (34) ménagée dans l'élément d'ouverture/de fermeture, et dans laquelle le port de charge (16) est monté ;
un élément de couvercle (36) prévu pour ouvrir et fermer l'ouverture de charge (34) ;
un moyen de verrouillage (18) d'élément d'ouverture/de fermeture destiné à verrouiller l'élément d'ouverture/de fermeture sur la caisse (12) de véhicule dans un état où l'élément d'ouverture/de fermeture ferme l'ouverture (22) de la caisse (12) de véhicule ;
**caractérisée en ce qu'**elle comprend en outre :
un moyen de verrouillage (38) d'élément de couvercle destiné à verrouiller l'élément de couvercle (36) sur l'élément d'ouverture/de fermeture dans un état où l'élément de couvercle (36) ferme l'ouverture de charge (34) ; et
un moyen d'opposition au déverrouillage (72) destiné à empêcher le déverrouillage de l'élément de couvercle (36) par le moyen de verrouillage (38) d'élément de couvercle quand le moyen de verrouillage d'élément d'ouverture/de fermeture est en état déverrouillé.

3. Structure d'unité de charge selon la revendication 1, **caractérisée en ce que** le véhicule (10) comporte une unité de commande du verrouillage de l'élément d'ouverture/de fermeture prévue pour commander le moyen de verrouillage (18) d'élément d'ouverture/de fermeture, et
le moyen d'opposition au déverrouillage (46) fonctionne conjointement au moyen de verrouillage (38) d'élément de couvercle pour annuler une commande de l'unité de commande du verrouillage de l'élément d'ouverture/de fermeture.

4. Structure d'unité de charge selon la revendication 2, **caractérisée en ce que** le véhicule (10) comporte une unité de commande du verrouillage de l'élément de couvercle prévue pour commander le moyen de verrouillage (38) d'élément de couvercle, et le moyen d'opposition au déverrouillage (72) fonctionne conjointement au moyen de verrouillage (18) d'élément d'ouverture/de fermeture pour annuler une commande de l'unité de commande du verrouillage de l'élément de couvercle.

5. Structure d'unité de charge selon l'une des revendications 1 à 4, **caractérisée en ce que** l'ouverture de la caisse (12) de véhicule est une ouverture d'extrémité supérieure (22) ménagée au-dessus d'un espace avant formé devant le tableau de bord, et
l'élément d'ouverture/de fermeture est un capot (14) prévu pour ouvrir et fermer l'ouverture d'extrémité supérieure (22).

6. Structure d'unité de charge selon l'une des revendications 1 à 4, **caractérisée en ce que** l'ouverture de la caisse (12) de véhicule est une ouverture de porte (86), et l'élément d'ouverture/de fermeture est une portière (88) prévue pour ouvrir et fermer l'ouverture de porte (86).

7. Structure d'unité de charge selon l'une des revendications 1 à 4, **caractérisée en ce que** l'ouverture de la caisse (12) de véhicule est une ouverture de coffre (90), et l'élément d'ouverture/de fermeture est un hayon prévu pour ouvrir et fermer l'ouverture de coffre (90).
